# EUROPEAN PATENT APPLICATION

(11) **EP 4 524 514 A1**
(43) Date of publication of application: **19.03.2025**
(21) Application number: 23197348.8
(22) Date of filing: 14.09.2023
(51) Int. Cl.: G01C 21/00, G05D 1/246, G06T 7/73, G06T 19/00

(54) **METHOD AND SYSTEM FOR ORIENTING A FIRST AND A SECOND SLAM DEVICE RELATIVE EACH OTHER**

(71) Applicant: Auki Labs Ltd, Wan Chai, Hong Kong (HK)
(72) Inventor: Steinberger, John, 1213 Geneva (CH); Pihl, Nils, Sham Shui Po (HK)
(74) Representative: Zacco Sweden AB

(57) **Abstract**

Provided is a computer implemented method for orienting a first simultaneous localization and mapping, SLAM, device and a second SLAM device relative each other. The method comprises determining a first set of position data and orientation data of the first SLAM device in its own coordinate system upon a camera of the first SLAM device viewing a plurality of landmarks, wherein each landmark of the plurality of landmarks is viewed from a separate position of the first SLAM device, communicating labels of the plurality of landmarks to the second SLAM device, determining a second set of position data and orientation data of the second SLAM device in its own coordinate system upon a camera of the second SLAM device viewing the plurality of landmarks, wherein each landmark of the plurality of landmarks is viewed from a separate position of the second SLAM device, and orienting the first SLAM device and the second SLAM device relative each other based on a first and second set of position data and orientation data. A system for which the method is implemented is also provided.

## Description

### TECHNICAL FIELD

The present disclosure belongs to methods and systems for orienting a first and a second simultaneous localization and mapping, SLAM, device relative to each other.

### BACKGROUND

During recent years, the number of applications utilizing augmented reality, AR, or virtual reality, VR, have increased immensely. This due to the ongoingly increasing calculation capability of handheld electronic devices; in particular, smartphones. AR applications allow a user to experience a combined real and virtual world by placing a virtual reality world over the real world that the user sees. VR, on the other hand, allows the user to appear in a completely virtual world centered around the user.

However, there are limitations with today's technology in regard to sharing the virtual or partly virtual world between users. In the case of AR, in particular, there is a need for improvements to allow camera-enabled devices to be accurately and precisely oriented relative to a coordinate system of another camera-enabled device, as well as staying correctly oriented in that coordinate system.

### SUMMARY

An object of the present inventive concept is to provide an approach for orienting two (or more) simultaneous localization and mapping, SLAM, devices relative to each other.

Another object is to provide an approach for orienting two (or more) SLAM devices relative to each other in an efficient manner from a computational power consumption point of view.

Another object is to provide an approach for orienting two (or more) SLAM devices relative to each other with high accuracy.

According to a first aspect, there is provided a method for orienting a first simultaneous localization and mapping, SLAM, device and a second SLAM device relative each other. The method comprising:
determining a first set of position data and orientation data of the first SLAM device in its own coordinate system upon a camera of the first SLAM device viewing a plurality of landmarks, wherein each landmark of the plurality of landmarks is viewed from a separate position of the first SLAM device;
communicating labels of the plurality of landmarks to the second SLAM device;
determining a second set of position data and orientation data of the second SLAM device in its own coordinate system upon a camera of the second SLAM device viewing the plurality of landmarks, wherein each landmark of the plurality of landmarks is viewed from a separate position of the second SLAM device, by:
   for each separate position of the second SLAM device,
   capturing a respective calibration image with the camera of the second SLAM device, the respective calibration image comprising a respective landmark of the plurality of landmarks,
   registering position data of the second SLAM device at a moment of capturing the respective calibration image,
   displaying, on a display of the second SLAM device, the respective calibration image and a respective representation of the label of the respective landmark as an overlay on the respective calibration image, wherein the label of the respective landmark comprises an anchor point and a depiction of the respective landmark,
   moving, within the respective calibration image, the anchor point until a position of the anchor point corresponds to the respective landmark, and
   determining orientation data of the second SLAM device based on the position of the anchor point in the respective calibration image; and
orienting the first SLAM device and the second SLAM device relative each other based on the determined first and second set of position data and orientation data.

The method facilitates determining location and orientation of the first SLAM device relative to the second SLAM device without a need of a separate coordinate system, such as the GPS or the like. That is, a relative transformation between a first coordinate system of the first SLAM device and a second coordinate system of the second SLAM device may be performed where either of the SLAM devices is situated in a third coordinate system. Hence, flexibility and convenience is facilitated. Further, any temporary or permanent location issue associated with the GPS system is accounted for, since the GPS is not needed by the method. Hence, mutual location (and orientation) accuracy may be improved by the method between the SLAM devices.

The movement of the anchor point for each representation of the labels may comprise receiving user input, the user input comprising moving each anchor point, and confirming a satisfactory correspondence between anchor point and landmark localization.

This may further facilitate accuracy of the orientation of the first and the second SLAM device. The movement may be made on a screen, preferably touch sensitive, of the second SLAM device. Preferably, the movement may be utilized by a user maneuver.

During receiving the user input, zooming of the calibration image may be allowed. Hence, higher accuracy upon moving each anchor point may be possible.

According to a second aspect, there is provided a non-transitory computer-readable storage medium having stored thereon program code portions for implementing the method according to the first aspect when executed on a device having processing capabilities.

The above-mentioned features of the first aspect, when applicable, apply to the second aspect as well. In order to avoid undue repetition, reference is made to the above.

According to a third aspect, there is provided a system configured to orient a first simultaneous localization and mapping, SLAM, device and a second SLAM device relative each other. The system comprising circuitry configured to execute different functions. The circuitry is configured to execute a first determining function configured to determine a first set of position data and orientation data of the first SLAM device in its own coordinate system upon a camera of the first SLAM device viewing a plurality of landmarks, wherein each landmark of the plurality of landmarks is viewed from a separate position of the first SLAM device. The circuitry is configured to execute a communication function configured to communicate labels of the plurality of landmarks to the second SLAM device. he circuitry is configured to execute a second determining function configured to determine a second set of position data and orientation data of the second SLAM device in its own coordinate system upon a camera of the second SLAM device viewing the plurality of landmarks, wherein each landmark of the plurality of landmarks is viewed from a separate position of the second SLAM device, by:
for each separate position of the second SLAM device,
   capturing a respective calibration image with the camera of the second SLAM device, the respective calibration image comprising a respective landmark of the plurality of landmarks,
   registering position data of the second SLAM device at a moment of capturing the respective calibration image,
   displaying, on a display of the second SLAM device, display the respective calibration image and a respective representation of the label of the respective landmark as an overlay on the respective calibration image, wherein the label of the respective landmark comprises an anchor point and a depiction of the respective landmark.
moving, within the respective calibration image, the anchor point until a position of the anchor point corresponds to the respective landmark, and
determining orientation data of the second SLAM device based on the position of the anchor point in the respective calibration image. The circuitry is configured to execute an orienting function configured to orient the first SLAM device and the second SLAM device relative each other based on the determined first and second set of position data and orientation data.

The above-mentioned features of the first aspect, when applicable, apply to the third aspect as well. In order to avoid undue repetition, reference is made to the above.

The second determining function may comprise a user input receiving function configured to receive user input, the user input comprising moving each anchor point, and confirming a satisfactory correspondence between anchor point and landmark localization.

The user input receiving function may further comprise a zooming function configured to allowing zooming of the calibration image.

A further scope of applicability of the present inventive concept will become apparent from the detailed description given below. However, it should be understood that the detailed description and specific examples, while indicating preferred embodiments of the inventive concept, are given by way of illustration only, since various changes and modifications within the scope of the inventive concept will become apparent to those skilled in the art from this detailed description.

Hence, it is to be understood that the present inventive concept is not limited to the particular component parts of the device described or acts of the methods described as such device and method may vary. It is also to be understood that the terminology used herein is for the purpose of describing particular embodiments only and is not intended to be limiting. It must be noted that, as used in the specification and the appended claims, the articles "a," "an," "the," and "said" are intended to mean that there are one or more of the elements unless the context clearly dictates otherwise. Thus, for example, reference to "a unit" or "the unit" may include several units, and the like. Furthermore, the words "comprising",
"including", "containing" and similar wordings do not exclude other elements or steps.

### BRIEF DESCRIPTION OF THE DRAWINGS

The above, as well as additional objects, features, and advantages of the present inventive concept, will be better understood through the following illustrative and non-limiting detailed description, with reference to the appended drawings, in the drawings like reference numerals will be used for like elements unless stated otherwise.
Fig. 1 shows a flowchart of a method for orienting a first and a second simultaneous localization and mapping, SLAM, device relative each other.
Fig. 2 schematically shows an exemplifying scenario of the method, wherein two SLAM devices are situated in different coordinate systems viewing features situated in an unspecified coordinate system.

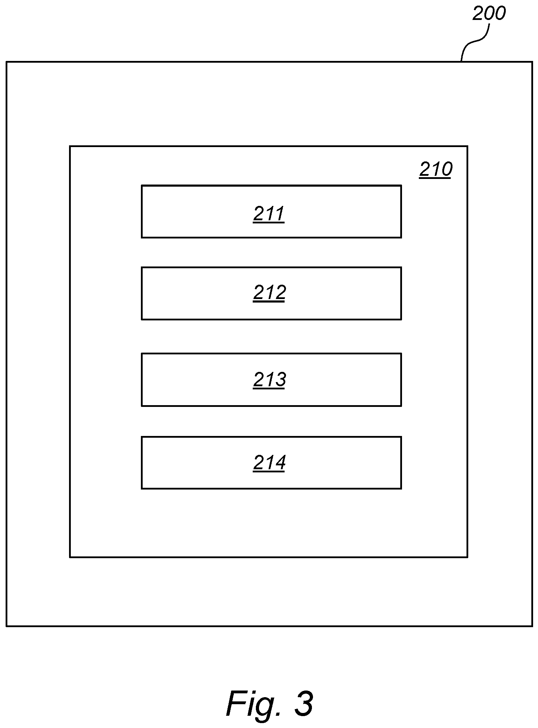

Fig. 3 schematically shows a system configured to orient a first and a second SLAM device relative each other.

### DETAILED DESCRIPTION

The present inventive concept will now be described more fully hereinafter with reference to the accompanying drawings, in which currently preferred variants of the inventive concept are shown. This inventive concept may, however, be embodied in many different forms and should not be construed as limited to the embodiments set forth herein; rather, these embodiments are provided for thoroughness and completeness, and to fully convey the scope of the inventive concept to the skilled person.

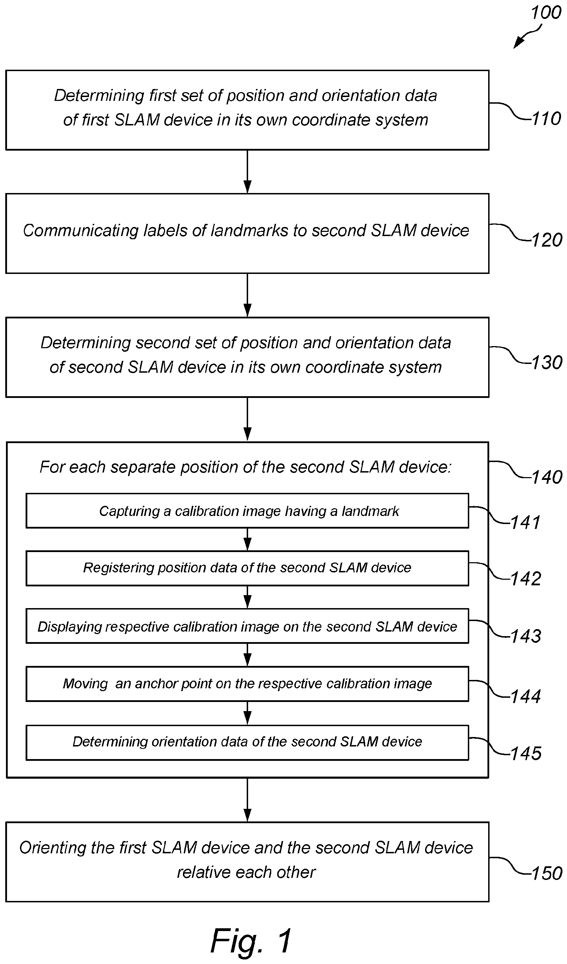

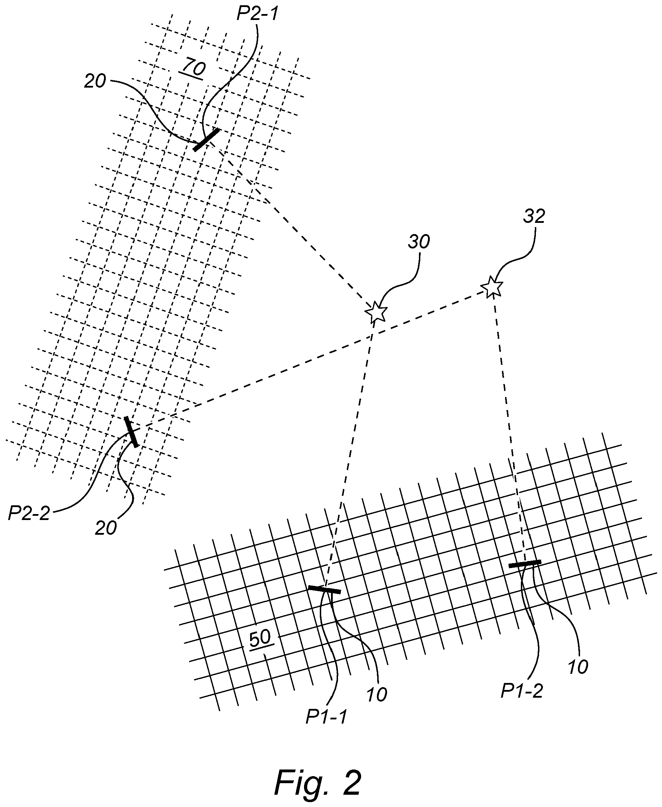

Fig . 1 shows a flowchart of a method 100 for orienting a first 10 and a second 20 simultaneous localization and mapping, SLAM, device relative each other. Fig. 2 may advantageously be viewed in parallel with Fig. 1 below, schematically showing an exemplifying scenario of the method 100 wherefrom some reference numerals originate. A SLAM device 10, 20 as discussed herein may be any kind of electronic device equipped with SLAM technology. Preferably, the SLAM devices 10, 20 (first and/or second) discussed herein may be handheld and/or worn. Examples of such SLAM devices 10, 20 are thus smartphones, tablets, watches, or any present or future equivalent thereof such as an AR, VR, or mixed reality, MR, headset, etc. Respective SLAM device comprises a display and communication means for communicating wirelessly with other electronic devices. Executable functions as discussed herein may be done locally on either or both of the SLAM devices 10, 20 and/or on a remote external server.

The method 100 comprises determining 110 a first set of position data and orientation data of the first SLAM device in its own coordinate system upon a camera of the first SLAM device 10 viewing a plurality of landmarks 30, 32, wherein each landmark of the plurality of landmarks is viewed from a separate position of the first SLAM device 10. Hence, positioning and orienting of the first SLAM device 10 may be done independently of any other (e.g., global/GPS) coordinate system. Example landmarks 30, 32 may be buildings, signs, roads, trees, corners of a building, etc.

The method 100 further comprises communicating 120 labels of the plurality of landmarks 30, 32 to the second SLAM device 20. The communication of the labels may be done over a network comprising a relatively small number of electronic devices. The labels may thus be communicated from the first SLAM device 10 to all of the electronic devices in the network including the second SLAM device 20. Alternatively, the network may comprise only the first 10 and the second 20 SLAM device, thereby having a one-to-one communication between the first 10 and the second 20 SLAM device. Example labels may be an east and a west corner of a specific building, a top of a church spire of a specific church, or the like. Manifestly, the labels are unambiguous to an extent that a user of respective SLAM device 10, 20 appreciates its spatial location, and is able to pinpoint that location on a photo or 3D map, etc.

The method 100 further comprises determining 130 a second set of position data and orientation data of the second SLAM device 20 in its own coordinate system 70 upon a camera of the second SLAM device 20 viewing the plurality of landmarks 30, 32, wherein each landmark 30, 32 of the plurality of landmarks 30, 32 is viewed from a separate position of the second SLAM device. This is made by the following: For each 140 separate position of the second SLAM device 20 (i) capturing 141 a respective calibration image with the camera of the second SLAM device, the respective calibration image comprising a respective landmark 30, 32 of the plurality of landmarks 30, 32, (ii) registering 142 position data of the second SLAM device 20 at a moment of capturing the respective calibration image, (iii) displaying 143, on a display of the second SLAM device 20, the respective calibration image and a respective representation of the label of the respective landmark 30, 32 as an overlay on the respective calibration image, wherein the label of the respective landmark comprises an anchor point and a depiction of the respective landmark 30, 32, and (iv) moving 144, within the respective calibration image, the anchor point until a position of the anchor point corresponds to the respective landmark 30, 32, and (v) determining 145 orientation data of the second SLAM device 20 based on the position of the anchor point in the respective calibration image. The depiction of the respective landmark 30, 32 may be represented by, e.g., a thumbnail on the screen.

The method 100 further comprises orienting 150 the first SLAM device 10 and the second SLAM device 20 relative each other based on the determined first and second set of position data and orientation data.

The movement of the anchor point for each representation of the labels may comprise receiving user input, wherein the user input may comprise moving each anchor point and confirm a satisfactory correspondence between anchor point and landmark 30, 32 localization.

During receiving user input, zooming of the calibration image may be allowed. This may be performed by the user or autonomously to further facilitate moving the anchor point to correspond to a specific landmark 30, 32 in the calibration image.

By way of example, for conveying the scope to the skilled person, the method discussed herein can be compared to a setup having two SLAM devices 10, 20 arranged to be oriented relative each other by means of a known coordinate system, e.g., the global positioning system, GPS. In such a setup, the two SLAM devices 10, 20 may orient themselves relative to the known coordinate system (GPS) independently, thereby allowing the first 10 and the second 20 SLAM device to be oriented relative each other. As appreciated, the method 100 disclosed herein, does not require presence of a known coordinate system.

Returning to the present method 100, Fig. 2 schematically shows an example use case of the method 100. Locations, angles, etc., are herein exaggerated for conceptual purposes. Herein, the first SLAM device 10 views a first landmark 30 situated in an unspecified (possibly unknown) coordinate system, wherein the first SLAM device 10 is situated and oriented at a first location P1-1 in a first coordinate system 50. Again, the term landmark may be a feature of a building such as a corner or a (point-like) top of the building. Hence, preferably, a landmark may be a substantially point-like feature of an artifact which a user may pinpoint, by, e.g., a crosshair at a pixel level on a screen. The first coordinate system 50 is thus the first SLAM devices' 10 own coordinate system 50 referred to above. Thereafter, at a later time, the first SLAM device 10 views, from another location and orientation at a second location P1-2 in the first coordinate system 50, a second landmark 32 (possibly another corner of the same or another building) situated in the unspecified coordinate system. The two locations P1-1, P1-2 and orientations are thus identified with the first set of position and orientation data. More than two locations and orientations may be possible within the scope of the claims. Further, more than two features 30, 32 may thus be involved upon practicing the method 100, further discussed below. A similar procedure is done by the second SLAM device 20 situated in a second coordinate system 70. That is, the second SLAM device 20 views the first landmark 30 situated in the unspecified coordinate system, wherein the second SLAM device 20 is situated and oriented at a first location P2-1 in the second coordinate system 70. The second coordinate system 70 is thus the second SLAM devices' 20 own coordinate system 70. Thereafter, at a later time, the second SLAM device 20 views, from another location and orientation at a second location P2-2 in the second coordinate system 70, the second landmark 32 situated in the unspecified coordinate system. These two locations P2-1, P2-2 and orientations are thus identified with the second set of position and orientation data. More than two locations and orientations may also here be possible within the scope of the claims, and more than two landmarks 30, 32 may thus be involved in the method 100. The landmarks 30, 32 are thus understood being commonly visible from the above-mentioned locations P1-1, P1-2, P2-1, P2-2. The procedure may be repeated from further locations from which possible further landmarks are viewed. In events the first SLAM device 10 views and communicate labels of a landmark/feature that cannot be viewed by the second SLAM device 20, these superfluous landmarks/features may be omitted by the second SLAM device 20 upon orientation 150 of the first 10 and the second 20 SLAM device relative each other.

Further, the method 100 may be performed for a plurality of sets of landmarks/features whereafter averaging the outcome of the orienting 150 the first 10 and the second 20 SLAM device, to thereby achieve improved accuracy of the first 10 and the second 20 SLAM device' mutual orientation relative each other. As appreciated, any statistical approach may in connection hereto be utilized, such as omitting one or more measurement outliers, etc. Fig. 2 displays two commonly visible landmarks 30, 32. In a practical implementation, the number of visible features may be four or more.

The measurement results from respective SLAM device 10, 20 may be mutually communicated over a network, such as a wireless network. For example, the first SLAM device 10 may measure the direction to four different landmarks and communicate these directions and the identity of the landmarks, to the second SLAM device 20. The second SLAM device 20 thereafter repeats the same measurements, thus outputting different results, since the two SLAM devices typically are spatially separated, in its own (the second) coordinate system 70. The number of required measurements depends on prerequisites of respective SLAM device 10, 20. For instance, should the SLAM devices 10, 20 have a built-in compass, an accelerometer, or other location- or orientation supporting means, the number of measurements to be performed may be reduced. Four measurements may however suffice in events of an upwardly oriented coordinate system of known scale and handedness being considered, or the like. The method 100 is robust to any interleaving of measurements between the two SLAM devices 10, 20. By way of example, the first SLAM device 10 may be the first SLAM device to carry out directional measurements to two visible landmarks A and B (not shown), whereas the second SLAM device 20 is the first SLAM device to carry out directional measurements to landmarks C and D (not shown). Eventually, both SLAM devices 10, 20 may carry out their own directional measurements to A, B, C and D. Furthermore, any use of a landmark that has a known coordinate in the first 50 or the second 70 coordinate system may reduce the number of theoretically required measurements by the first SLAM device 10. By way of example, given that the landmarks A and B both have known coordinates in the second coordinate system 70, the first SLAM device 10 may need to perform 4 - 2 = 2 directional measurements to locate itself, namely to the given landmarks A and B. Further, the coordinates of A and B in the second coordinate system 70 may be obtained, by the second SLAM device 20, by a preliminary set of stereoscopic measurements (two measurements for the landmark A and two measurements for the landmark B).

Hence, the method 100 is to be understood to differ between pointing at landmarks present in a known coordinate system, and, per the above, pointing at coordinates/landmarks that are not a priori known.

In addition to the above discussed mathematical idea, logistical features may be added that may advantageous to either match different measurements (i.e., a specific pointing of the first SLAM device 10 is matched against (another) specific pointing of the second SLAM device 20, since, e.g., both SLAM devices 10, 20 pointed at a specific known landmark) via said labels, and graphical user interfaces, GUIs, features that may benefit improving the accuracy of pointing, such as by freezing a picture frame and drag-and-dropping a crosshair onto a specific labeled landmark 30, 32.

The method 100 may be implemented on a non-transitory computer-readable storage medium having stored thereon program code portions when executed on a device having processing capabilities.

In connection with Fig . 3, there is schematically shown a system 200 configured to orient the first and the second SLAM device relative each other. The system 200 comprises circuitry 210. The system may be physically located on any suitable location, i.e., on one or more remote servers, thereby being cloud-based, etc. The circuitry 210 is configured to carry out overall control of functions and operations of the system 200. The circuitry 210 may, e.g., be spatially separated from any of the SLAM devices 10, 20. The circuitry 210 may include a processor, such as a central processing unit (CPU), microcontroller, or microprocessor. The processor is configured to execute program code stored in the circuitry 210 to carry out functions and operations of the system 200. Executable functions, further described above and below, may be stored on a memory. The memory may be one or more of a buffer, a flash memory, a hard drive, a removable media, a volatile memory, a non-volatile memory, a random access memory (RAM), or other suitable devices. In a typical arrangement, the memory may include a non-volatile memory for long term data storage and a volatile memory that functions as system memory for the circuitry 210. The memory may exchange data with the circuitry 210 over a data bus. Accompanying control lines and an address bus between the memory and the circuitry 210 may be present.

Functions and operations of the circuitry 210 may be embodied in the form of executable logic routines, e.g., computer-code portions, software programs, etc., that are stored on a non-transitory computer readable medium, e.g., the memory, of the controller 46 and are executed by the circuitry 210 by, e.g., using the processor. The functions and operations of the system 200 may be a stand-alone software application or form a part of a software application that carries out additional tasks related to the system 200. The described functions and operations may be considering a method that the corresponding device is configured to carry out. Also, while the described functions and operations may be implemented in a software, such functionality may as well be carried out via dedicated hardware or firmware, or some combination of hardware, firmware and/or software.

More specifically, the circuitry 210 is configured to execute a first determining function 211 configured to determine a first set of position data and orientation data of the first SLAM device 10 in its own coordinate system 50 upon a camera of the first SLAM device viewing a plurality of landmarks 30, 32, wherein each landmark 30, 32 of the plurality of landmarks is viewed from a separate position P1-1, P1-2 of the first SLAM device 10.

The circuitry 210 is further configured to execute a communication function 212 configured to communicate labels of the plurality of landmarks 30, 32 to the second SLAM device 20.

The circuitry 210 is further configured to execute a second determining function 213 configured to determine a second set of position data and orientation data of the second SLAM device 20 in its own coordinate 70 system upon a camera of the second SLAM device 20 viewing the plurality of landmarks, wherein each landmark 30, 32 of the plurality of landmarks 30, 32 is viewed from a separate position P2-1, P2-2 of the second SLAM device 20.

The second determining function 213 further comprises a set of nested functions (child functions). For each separate position P2-1, P2-2 of the second SLAM device the nested functions in connection thereto are configured to:
- capturing a respective calibration image with the camera of the second SLAM device 20, the respective calibration image comprising a respective landmark 30, 32 of the plurality of landmarks,
- registering position data of the second SLAM device 20 at a moment of capturing the respective calibration image,
- displaying, on a display of the second SLAM device 20, display the respective calibration image and a respective representation of the label of the respective landmark 30, 32 as an overlay on the respective calibration image, wherein the label of the respective landmark comprises an anchor point and a depiction of the respective landmark,
- moving, within the respective calibration image, the anchor point until a position of the anchor point corresponds to the respective landmark, and
- determining orientation data of the second SLAM device 20 based on the position of the anchor point in the respective calibration image.

The circuitry 210 is further configured to execute an orienting function 214 configured to orient the first SLAM device 10 and the second SLAM device 20 relative each other based on the determined first and second set of position data and orientation data.

The above-mentioned description of the method 100, when applicable, apply to the system 200 as well. In order to avoid undue repetition, reference is made to the above.

The second determining function 213 may further comprise a nested function configured to execute a user input receiving function configured receiving user input, the user input comprising moving each anchor point, and confirming a satisfactory correspondence between anchor point and landmark localization.
The user input receiving function may further comprise a zooming function configured to allowing zooming of the calibration image.

Accordingly, and in summary, in some variants discussed above, there has been described methods and systems in an approach for orienting a first 10 and a second 20 SLAM device relative each other. The approach relies on interaction between the SLAM devices 10, 20 being independent of any global coordinate system (such as GPS). Mutual calibration between the SLAM devices 10, 20 takes input from one or more landmarks 30, 32 visible from both SLAM devices' 10, 20 temporary locations, and does thereby not require mutual calibration with respect to a flat surface or the like.

The person skilled in the art realizes that the present inventive concept by no means is limited to the preferred embodiments described above. On the contrary, many modifications and variations are possible within the scope of the appended claims. Variations to the disclosed embodiments can be understood and effected by the skilled person in practicing the claimed invention, from a study of the drawings, the disclosure, and the appended claims.

## Claims

1. A computer implemented method (100) for orienting a first simultaneous localization and mapping, SLAM, device (10) and a second SLAM device (20) relative each other, the method (100) comprising:
determining (110) a first set of position data and orientation data of the first SLAM device (10) in its own coordinate system (50) upon a camera of the first SLAM device (10) viewing a plurality of landmarks (30, 32), wherein each landmark (30, 32) of the plurality of landmarks (30, 32) is viewed from a separate position (P1-1, P1-2) of the first SLAM device (10);
communicating (120) labels of the plurality of landmarks (30, 32) to the second SLAM device (20);
determining (130) a second set of position data and orientation data of the second SLAM device (20) in its own coordinate system (70) upon a camera of the second SLAM device (20) viewing the plurality of landmarks (30, 32), wherein each landmark (30, 32) of the plurality of landmarks (30, 32) is viewed from a separate position of the second SLAM device (20), by:
for each separate position of the second SLAM device (20),
capturing (141) a respective calibration image with the camera of the second SLAM device (20), the respective calibration image comprising a respective landmark (30, 32) of the plurality of landmarks (30, 32),
registering (142) position data of the second SLAM device (20) at a moment of capturing the respective calibration image,
displaying (143), on a display of the second SLAM device (20), the respective calibration image and a respective representation of the label of the respective landmark (30, 32) as an overlay on the respective calibration image, wherein the label of the respective landmark (30, 32) comprises an anchor point and a depiction of the respective landmark (30, 32),
moving (144), within the respective calibration image, the anchor point until a position of the anchor point corresponds to the respective landmark (30, 32), and
determining (145) orientation data of the second SLAM device (20) based on the position of the anchor point in the respective calibration image; and
orienting (150) the first SLAM device (10) and the second SLAM device (20) relative each other based on the determined first and second set of position data and orientation data.

2. The method (100) according to claim 1, wherein moving (144) the anchor point for each representation of the labels comprises receiving user input, the user input comprising moving each anchor point, and confirming a satisfactory correspondence between anchor point and landmark localization.

3. The method (100) according to claim 2, wherein, during receiving user input, allowing zooming of the calibration image.

4. A non-transitory computer-readable storage medium having stored thereon program code portions for implementing the method (100) according to any one of claims 1-3 when executed on a device having processing capabilities.

5. A system (200) configured to orient a first simultaneous localization and mapping, SLAM, device (10) and a second SLAM device (20) relative each other, the system (200) comprising:
circuitry (210) configured to execute:
a first determining function (211) configured to determine a first set of position data and orientation data of the first SLAM device (10) in its own coordinate system (50) upon a camera of the first SLAM device (10) viewing a plurality of landmarks (30, 32), wherein each landmark (30, 32) of the plurality of landmarks (30, 32) is viewed from a separate position of the first SLAM device (10);
a communication function (212) configured to communicate labels of the plurality of landmarks to the second SLAM device (20);
a second determining function (213) configured to determine a second set of position data and orientation data of the second SLAM device (20) in its own coordinate system (70) upon a camera of the second SLAM device (20) viewing the plurality of landmarks, wherein each landmark (30, 32) of the plurality of landmarks (30, 32) is viewed from a separate position of the second SLAM device (20), by:
for each separate position of the second SLAM device (20),
capturing a respective calibration image with the camera of the second SLAM device (20), the respective calibration image comprising a respective landmark (30, 32) of the plurality of landmarks (30, 32),
registering position data of the second SLAM device (20) at a moment of capturing the respective calibration image,
displaying, on a display of the second SLAM device (20), display the respective calibration image and a respective representation of the label of the respective landmark (30, 32) as an overlay on the respective calibration image, wherein the label of the respective landmark (30, 32) comprises an anchor point and a depiction of the respective landmark (30, 32),
moving, within the respective calibration image, the anchor point until a position of the anchor point corresponds to the respective landmark (30, 32), and
determining orientation data of the second SLAM device (20) based on the position of the anchor point in the respective calibration image; and
an orienting function (214) configured to orient the first SLAM device (10) and the second SLAM device (20) relative each other based on the determined first and second set of position data and orientation data.

6. The system (200) according to claim 5, wherein the second determining function (213) comprises a user input receiving function configured to receive user input, the user input comprising moving each anchor point, and confirming a satisfactory correspondence between anchor point and landmark localization.

7. The system (200) according to claim 6, wherein the user input receiving function further comprises a zooming function configured to allowing zooming of the calibration image.
